# EUROPÄISCHE PATENTSCHRIFT

(11) **EP 0 870 477 B1**
(45) Veröffentlichungstag und Bekanntmachung des Hinweises auf die Patenterteilung: **28.02.2001**
(21) Anmeldenummer: 98105678.1
(22) Anmeldetag: 27.03.1998
(51) Int. Cl.: A61C 3/025

(54) **Zahnärztliches Handstück**
Dental handpiece
Pièce à main dentaire

(30) Priorität: 07.04.1997 DE 19714276
(43) Veröffentlichungstag der Anmeldung: 14.10.1998
(73) Patentinhaber: Ferton Holding, 2800 Delemont (CH)
(72) Erfinder: Chavanne, Philippe, 1123 Aclens (CH)
(74) Vertreter: Gauger, Hans-Peter, Dipl.-Ing.

(56) Entgegenhaltungen:
- US-A- 4 608 018
- US-A- 4 648 840

## Beschreibung

Die Erfindung bezieht sich auf ein zahnärztliches Handstück zur Prophylaxe-Behandlung von kariösen Zähnen mit einem mit Luft vermischten Pulver und Wasser.

Bei einem aus der US 4 648 840 bekannten Handstück der vorgenannten Art ist an dem rückwärtigen Ende einer Griffhülse ein integrierter Pulverbehälter angeordnet, der eine für die Zahnbehandlung vorbestimmte Pulvermenge bevorratet. Der Pulverbehälter ist als ein zylindrischer Topf ausgebildet, dessen Achse im wesentlichen senkrecht zu der Griffhülse ausgerichtet ist. Dieser zylindrische Topf weist an seinem offenen Ende eine Schraubverbindung mit der Griffhülse auf. An dieser Schraubverbindung sind in der Griffhülse das gegen den Boden des Topfes ausgerichtete Einlaßende einer Zuleitung für Druckluft und unmittelbar daneben das Auslaßende einer Überführungsleitung für Pulver im Gemisch mit Luft jeweils als achsparallele Anschlußbohrungen dieser beiden Leitungen ausgebildet. Ein in dem Pulverbehälter gebildetes Pulver-Luft-Gemisch wird über die Überführungsleitung an eine Mehrfach-Düsenanordnung überführt, die an einem vorderen Sprühkopf des Handstückes vorhanden ist. Mit dieser Düsenanordnung ist auch eine Zuleitung für Wasser verbunden, damit zum Zeitpunkt einer Zahnbehandlung eine gemeinsame Abgabe mit dem Pulver-Luft-Gemisch erhalten wird. Die Zuleitung von Druckluft erfolgt gemeinsam mit einer Zuleitung von Wasser über eine an dem rückwärtigen Ende der Griffhülse vorgesehene Turbinen-Schnellkupplung eines Versorgungsanschlusses für Luft und Wasser.

Durch die topfförmige Ausbildung des Pulverbehälters und die dafür vorgesehenen Anschlüsse der Zuleitung für die Druckluft und der Überführungsleitung für das Pulver-Luft-Gemisch können sich während einer Zahnbehandlung ungünstige Mischungsverhältnisse der Luft mit dem Pulver ergeben. Damit die Prophylaxe-Behandlung nicht unnötig benachteiligt wird, erfordert daher das bekannte Handstück ein vermehrtes Geschick des behandelnden Zahnarztes, wobei er auch das unterschiedliche Schwereverhalten des Handstückes einbeziehen muß, welches sich aus der bei anderen Handstücken seiner täglichen Praxis nicht vorhandenen Anordnung des Pulverbehälters in der unmittelbaren Nähe der Turbinen-Schnellkupplung des Versorgungsanschlusses für Luft und Wasser ergibt.

Der Erfindung liegt die Aufgabe zugrunde, ein zahnärztliches Handstück zur Prophylaxe-Behandlung von kariösen Zähnen mit einem mit Luft vermischten Pulver und Wasser bereitzustellen, bei welchem die Vermischung des Pulvervorrates innerhalb des integrierten Pulverbehälters einer Griffhülse mit der aus einem Versorgungsanschluß über eine Turbinen-Schnellkupplung zugeleiteten Druckluft weniger kritisch abläuft und bei welchem der Zahnarzt für die Dauer einer Zahnbehandlung eine größere Freiheit bei der Handhabung des Handstückes erhält.

Erfindungsgemäß wird diese Aufgabe dadurch gelöst, daß bei einem zahnärztlichen Handstück mit integriertem Pulverbehälter dieser Pulverbehälter als ein geschlossener und räumlich nach allen Richtungen als eine Wirbelkammer wirksamer Rotationshohlkörper ausgebildet ist, bei welcher die Auslaß- und Einlaßenden der Druckluft-Zuleitung und der Überführungsleitung für das Pulver-Luft-Gemisch im wesentlichen in der geometrischen Mitte dieses Rotationshohlkörpers angeordnet sind.

Der für den Pulverbehälter vorgesehene Rotationshohlkörper ergibt mit seinem Hohlraum Strömungsverhältnisse für die zugeleitete Druckluft, die unabhängig von jedem willkürlichen Halten des Handstückes eine optimale Vermischung der Luft mit dem Pulver sicherstellen. Damit wird auch eine gleichbleibende Konsistenz des gebildeten Luft-Pulver-Gemisches und dessen sichere Überführung an die Düsenanordnung des Sprühkopfes gewährleistet. Für die Vermischung der Luft mit dem Pulver können dabei die Verhältnisse einer nahezu idealen Wirbelkammer insbesondere dann erhalten werden, wenn der Rotationshohlkörper als eine Hohlkugel ausgebildet ist. Ebenso optimale Strömungsverhältnisse sind jedoch auch erreichbar mit der Ausbildung des Rotationshohlkörpers als ein hohles Rotationsellipsoid, dessen Hauptachse in der Längsrichtung der Griffhülse verläuft. Dabei können auch geeignete Prallflächen in dem Hohlraum des Rotationshohlkörpers vorgesehen sein, um eine Verwirbelung des Pulver-Luft-Gemisches noch vor seiner Überführung in die Überführungsleitung noch weiter zu begünstigen. Eine ebenso günstige Beeinflussung der Verhältnisse beim Vermischen der Luft mit dem Pulver kann auch damit erhalten werden, daß der Rotationshohlkörper etwa auf halber Länge der Griffhülse angeordnet wird, um so mit dem integrierten Pulverbehälter im wesentlichen den Schwerebereich des Handstückes auszubilden. Mit einer solchen Anordnung des Pulverbehälters kann nämlich das Handstück nach dem Diktat der gewünschten Zahnbehandlung willkürlich manipuliert werden bei ständiger Sicherstellung von optimalen Verhältnissen für die Vermischung der zugeleiteten Druckluft mit dem bevorrateten Pulver. Die beabsichtigte Prophylaxe-Behandlung kann daher entsprechend optimal ausgeführt werden.

Weitere Merkmale und Vorteile des erfindungsgemäßen Handstückes ergeben sich aus der nachfolgenden Beschreibung eines in der Zeichnung schematisch dargestellten Ausführungsbeispieles. Es zeigt
- Fig. 1: eine Perspektivansicht in teilweise auseinandergezogener Darstellung des Handstückes mit einem integrierten Pulverbehälter in der Ausbildung einer Hohlkugel,
- Fig. 2: eine teilweise geschnittene Gesamtansicht des Handstückes und
- Fig. 3: eine Schnittdarstellung der mit Rohrstücken ausgebildeten Auslaß- und Einlaßenden der Druckluft-Zuleitung und der Überführungsleitung für das Pulver-Luft-Gemisch bei dem Handstück der Fig. 1 und 2.

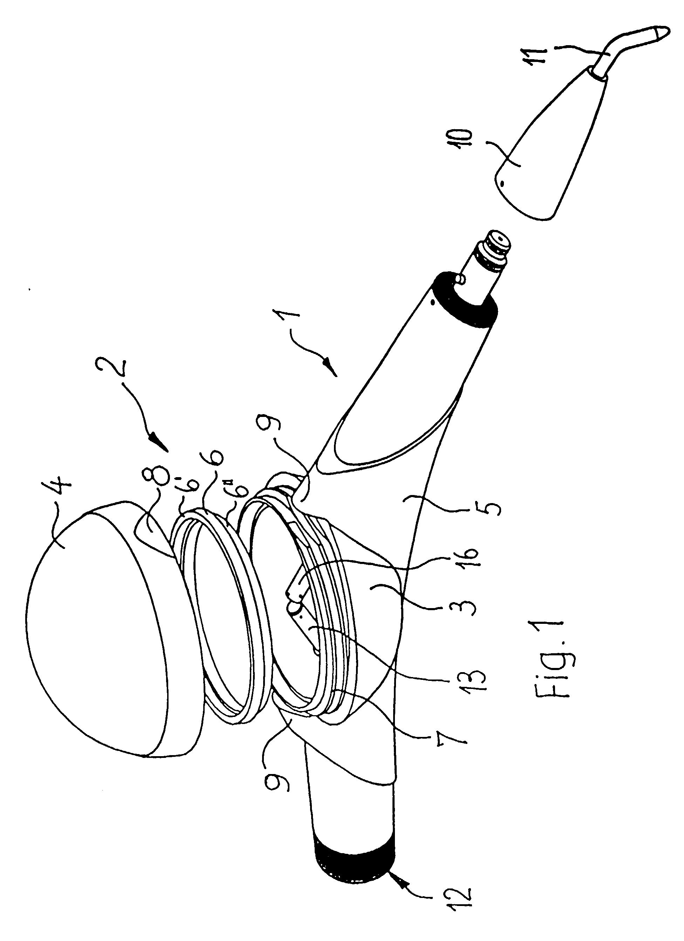

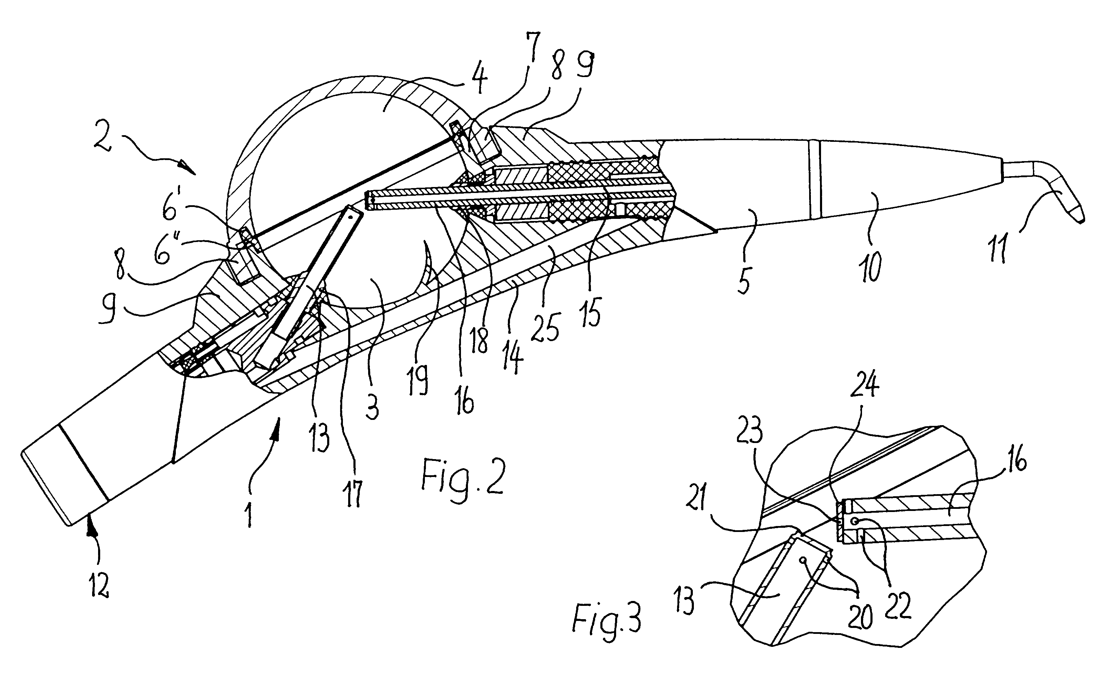

Gemäß der Darstellung in Fig. 1 ist ein zahnärztliches Handstück 1 mit einem integrierten Pulverbehälter 2 gezeigt, der als ein geschlossener Rotationshohlkörper die Form einer Hohlkugel aufweist. Diese Hohlkugel ist mit zwei Kugelhälften 3 und 4 ausgebildet. Die eine Kugelhälfte 3, die ein erstes Teilstück dieses Rotationshohlkörpers bildet, ist an einer Griffhülse 5 des Handstückes fest angeordnet und kann gemäß der Darstellung in Fig. 2 mit dem Gehäuse der Griffhülse einstückig ausgebildet sein. Die zweite Kugelhälfte 4, die ein zweites Teilstück des Rotationshohlkörpers ergibt, ist als ein abnehmbarer Deckelteil ausgebildet, welcher unter Zwischenfügung eines Dichtungsringes 6 mit der an der Griffhülse 5 fest angeordneten Kugelhälfte 3 lösbar verbunden werden kann. Für eine lösbare Verbindung der beiden Kugelhälften 3 und 4 ist ein Bajonettverschluß 7 vorgesehen, jedoch kann dafür auch eine Schraubverbindung realisiert sein.

Der Bajonettverschluß 7 ist zweckmäßig so ausgebildet, daß nach dem Aufsetzen der als ein Deckelteil dienenden Kugelhälfte 4 auf die Kugelhälfte 3 eine relative Drehung über einen Drehwinkel von bspw. etwa 100° benötigt wird, um die Kugelhälfte 4 aus einer Offenstellung in eine Schließstellung zu überführen. Um diese Schließstellung insbesondere gegenüber dem in dem Pulverbehälter nach der Zuleitung von Druckluft vorherrschenden Innendruck noch zusätzlich zu sichern, sind an der Kugelhälfte 4 an zwei diametral gegenüberliegenden Stellen zwei nockenförmige Erhebungen 8 ausgebildet, die mit korrespondierenden Vertiefungen an Vorsprüngen 9 des Gehäuses der Griffhülse 5 eine Rastverbindung ergeben, sobald der Deckelteil in seine Schließstellung gebracht ist. Die Rastverbindung ist so ausgebildet, daß sie für ihr Erreichen die Überwindung eines Gegendruckes erfordert, mit welchem die Schließkraft des Bajonettverschlusses 7 erhöht wird.

Das Handstück 1 ist an dem vorderen Ende der Griffhülse 5 mit einem abnehmbaren Sprühkopf 10 versehen. Der Sprühkopf 10 weist eine Mehrfach-Düsenanordnung 11 auf, über welche ein in dem Pulverbehälter 2 gebildetes Pulver-Luft-Gemisch gemeinsam mit Wasser versprüht wird, welches über eine innerhalb der Griffhülse verlaufende Zuleitung herangeführt wird. Die für die Vermischung des Pulvers innerhalb des Pulverbehälters 2 benötigte Druckluft und das Wasser werden aus einem Versorgungsanschluß für Luft und Wasser über eine Turbinen-Schnellkupplung erhalten, die über eine am rückwärtigen Ende der Griffhülse 5 vorgesehene Kupplungshälfte 12 angeschlossen wird. Die Schnellkupplung kann eine Ausbildung aufweisen wie bspw. beschrieben in der DE 25 49 177 C3.

Die Ausbildung des Pulverbehälters 2 als ein geschlossener Rotationshohlkörper bevorzugt in der Form einer Hohlkugel mit einer Anordnung im wesentlichen im Schwerebereich des Handstückes 1 ergibt für die Vermischung des in dem Pulverbehälter bevorrateten Pulvers mit der Druckluft nahezu ideale Mischungsverhältnisse. Eine solche Hohlkugel kann nämlich hinsichtlich der in ihr vorherrschenden Strömungsverhältnisse als eine räumlich nach allen Richtungen wirksame Wirbelkammer angesehen werden. Die besonderen Strömungsverhältnisse innerhalb der Hohlkugel werden primär damit optimiert, daß die Druckluft gemäß der Darstellung in Fig. 2 über ein Rohrstück 13 in den Innenraum der Hohlkugel zugeleitet wird. Das Rohrstück 13 bildet dabei das Auslaßende der Zuleitung für Druckluft, die über die vorerwähnte Schnellkupplung an den gemeinsamen Versorgungsanschluß für Luft und Wasser angeschlossen ist. Das Rohrstück 13 ist in die mit der Griffhülse 5 gemeinsame Wand 14 der einen Kugelhälfte 3 so eingesetzt, daß mit diesem Rohrstück eine im wesentlichen auf die Kugelmitte ausgerichtete Anordnung erhalten wird. Zu dem Auslaßende des Rohrstückes 13 ist andererseits das Einlaßende einer zu der Mehrfach-Düsenanordnung 11 des Sprühkopfes 10 führenden Überführungsleitung 15 für Pulver im Gemisch mit Luft unmittelbar benachbart angeordnet. Auch dieses Einlaßende der Überführungsleitung 15 ist mit einem Rohrstück 16 ausgebildet, welches wie das Rohrstück 13 im wesentlichen auf die Mitte der mit den beiden Kugelhälften 3 und 4 gebildeten Hohlkugel ausgerichtet ist. Auch das Rohrstück 16 ist in die mit der einen Kugelhälfte 3 gemeinsame Wand 14 der Griffhülse 5 eingesetzt.

Die beiden Rohrstücke 13 und 16 sind durch je eine Manschettendichtung 17 bzw. 18 an der Kugelhälfte 3 abgedichtet festgelegt. Jede Manschettendichtung 17, 18 ist dabei zur Sicherstellung einer optimalen Abdichtung des Pulverbehälters mit zwei etwa konusförmigen Dichtungslippen versehen. Die im Innenraum der Hohlkugel angeordnete eine Dichtungslippe wird als Folge einer Verformung gegen die Innenwand der Kugelhälfte 3 angepreßt, sobald die Druckluft über das Rohrstück 13 zugeleitet wird.

Wegen dieser Verformung wird daher auch die Durchführung des zugeordneten Rohrstückes durch die Wand der Kugelhälfte nach außen verstärkt abgedichtet.

Eine solche verstärkte Abdichtwirkung durch die in das Innere der Hohlkugel zugeleitete Druckluft wird daneben auch durch den Dichtungsring 6 erhalten. Dieser Dichtungsring 6 ist dafür mit zwei stufenförmig abgesetzten Dichtungslippen ausgebildet, von welchen die eine Dichtungslippe 6' in eine Ringnut des Deckelteils 4 einfaßt. Die zweite Dichtungslippe 6" hat dagegen an einem inneren Dichtungsrand der mit der Wand 14 der Griffhülse 5 gemeinsamen Kugelhälfte 3 eine abdichtende Anlage. Mit dieser Ausbildung des Dichtungsringes 6 wird erreicht, daß bei der Befestigung der Kugelhälfte 4 an der Kugelhälfte 3 eine Quetschung der einen Dichtungslippe 6' erhalten wird, die eine Druckerhöhung innerhalb des Dichtungsringes 6 und somit eine weitere Sicherung der Schließstellung des Bajonettverschlusses 7 ergibt. Der erhöhte Innendruck nach der Zuleitung der Druckluft wirkt sich andererseits unmittelbar auf die zweite Dichtungslippe 6" aus, so daß auf diese Weise die Abdichtwirkung des Dichtungsringes optimiert wird.

Aus der Fig. 2 ist weiterhin ableitbar, daß die beiden Rohrstücke 13 und 16 bei einer Ausbildung des Pulverbehälters 2 in der Form einer Hohlkugel unter einem Winkel von etwa 130° bis 135° schräg zueinander verlaufen. Mit dieser Ausrichtung der beiden Rohrstücke werden optimale Strömungs- und Mischungsverhältnisse in dem Innenraum der Hohlkugel angestrebt, sobald Druckluft über das eine Rohrstück 13 für eine intensive Vermischung mit dem in dem Pulverbehälter bevorrateten Pulver zugeleitet wird. Wenngleich bereits mit der Formgebung der Hohlkugel sichergestellt ist, daß der für die Vermischung der Luft mit dem Pulver genutzte Hohlraum als eine Wirbelkammer zur Verfügung steht, die räumlich nach allen Richtungen wirksam ist, kann die damit erreichte Durchwirbelung des Pulver-Luft-Gemisches noch weiter durch das Vorsehen von Prallflächen begünstigt werden, wie bspw. einer Prallfläche 19, die für die eine Kugelhälfte 3 mit einer mit der Wand 14 einstückigen Ausbildung gezeigt ist. Die räumliche Wirkung nach allen Richtungen dieser Wirbelkammer kann weiter dadurch begünstigt werden, daß das Auslaßende des Rohrstückes 13 gemäß der vergrößerten Darstellung in Fig. 3 mit einem perforierten Kranz von Luft-Auslaßöffnungen 20 stromaufwärts von einer endseitigen Verschlußplatte 21 versehen ist, die dabei unter einem Winkel von etwa 45° bis 60° schräg zu der Achse des Rohrstückes 13 ausgerichtet sein kann.

Durch die schräg zueinander verlaufende Anordnung der beiden Rohrstücke 13 und 16 wird andererseits auch die Überführung des in dem Innenraum des Pulverbehälters gebildeten Pulver-Luft-Gemisches hin zu der Mehrfach-Düsenanordnung 11 an dem vorderen Sprühkopf 10 der Griffhülse 5 begünstigt. Die Überführung kann dabei durch die ebenfalls in Fig. 3 vergrößert dargestellte Ausbildung des Auslaßendes der Überführungsleitung 15 begünstigt werden, nämlich mit der Ausbildung ebenfalls eines perforierten Kranzes von Einlaßöffnungen 22 stromabwärts von einem eine mittige Einlaßbohrung 23 aufweisenden endseitigen Düsenstück 24, welches wie das Verschlußstück 21 des Rohrstückes 13 für das Ende des Rohrstückes 16 vorgesehen ist. Um die Einströmverhältnisse an dem Einlaßende der Überführungsleitung 15 für das Pulver-Luft-Gemisch zu optimieren, kann dabei noch zweckmäßig vorgesehen sein, daß die Rohrstücke 13 und 16 zwischen einer kantenseitigen Berührungsstellung der Verschlußplatte 21 und des Düsenstückes 24 und einem kantenseitigen Abstand bis maximal etwa 1.0 bis 1.5 mm relativ zueinander verstellbar sind. Diese Verstellmöglichkeit wird dabei zweckmäßig mit einer relativ verstellbaren Anordnung der beiden Rohrstücke in der Wand 14 der Griffhülse 5 erhalten. Für die Wand 14 ist im übrigen in Fig. 2 noch eine Bohrung 25 gezeigt, mit welcher eine Teillänge der zu der Mehrfach-Düsenanordnung 11 des Sprühkopfes 10 führenden Zuleitung von Wasser ausgebildet ist. Diese Zuleitung von Wasser ist über die Turbinen-Schnellkupplung am rückwärtigen Ende der Griffhülse 5 an den Versorgungsanschluß für Luft und Wasser angeschlossen.

Für eine praktische Ausführungsform des Handstückes ist bspw. eine Versorgung mit Druckluft von etwa 2.5 bis 3.0 bar mit einem Durchsatz von etwa 45 l/min und eine Versorgung mit Wasser unter einem Druck von 1.8 bar über die Turbinen-Schnellkupplung vorgegeben. Mit diesen Werten läßt sich das Versprühen eines zum Entfernen von Plaque und Verfärbungen auf Zahnoberflächen genutzten Strahls eines Pulver-Luft-Gemisches und Wasser regeln.

Für eine mit dem Handstück beabsichtigte Einmalbehandlung kann dabei die Hohlkugel mit einem Volumen von etwa 50 cm³ ausgeführt sein und zu etwa einem Drittel mit dem Pulver gefüllt werden, wobei dafür bspw. Natrimbicarbonat als Hauptbestandteil oder auch andere Schleifkörner mit einer Korngröße bis maximal etwa 100 um verwendet werden. Bei diesen Werten weist jede Auslaßöffnung 20 am Auslaßende des Rohrstückes 13 einen Durchmesser von bspw. 0.4 mm auf, während jede Einlaßöffnung 22, 23 am Einlaßende des Rohrstückes 16 dann einen Durchmesser von bspw. 0.6 mm aufweist.

Abschließend sei noch erwähnt, daß der Pulverbehälter auch als ein Rotationsellipsoid ausgebildet sein kann, dessen Hauptachse dabei in der Längsrichtung des Handstückes resp. seiner Griffhülse verläuft. Um eine Sichtverbindung mit dem Innenraum des Pulverbehälters zu erhalten, kann der abnehmbare Deckelteil aus einem transparenten Material bestehen. Seine Größe kann grundsätzlich so bemessen sein, daß nur mit diesem Deckelteil eine über die Griffhülse nach oben vorstehende Ausbildung erhalten wird.

## Patentansprüche

1. Zahnärztliches Handstück (1) zur Prophylaxe-Behandlung von kariösen Zähnen mit einem mit Luft vermischten Pulver und Wasser, mit
- einer Griffhülse (5);
- einem mit der Griffhülse (5) integrierten Pulverbehälter (2), der eine für die Zahnbehandlung vorbestimmte Pulvermenge bevorratet;
- einer mit dem Pulverbehälter (2) verbundenen Zuleitung (13) für Druckluft;
- einer zwischen dem Pulverbehälter (2) und einer Mehrfach-Düsenanordnung (11) an einem vorderen Sprühkopf (10) der Griffhülse (5) verlaufenden Überführungsleitung (15) für Pulver im Gemisch mit Luft, deren behälterseitiges Einlaßende zu dem behälterseitigen Auslaßende der Druckluft-Zuleitung (13) benachbart angeordnet ist;
- einer mit der Mehrfach-Düsenanordnung (11) verbundenen Zuleitung (25) für Wasser; und
- einer am rückwärtigen Ende der Griffhülse (5) vorgesehenen Kupplungshälfte (12) einer Turbinen-Schnellkupplung eines Versorgungsanschlusses für Luft und Wasser;
dadurch gekennzeichnet, daß
- der Pulverbehälter (2) als ein geschlossener und räumlich nach allen Richtungen als eine Wirbelkammer wirksamer Rotationshohlkörper (3, 4) ausgebildet ist und
- die Auslaß- und Einlaßenden der Druckluft-Zuleitung (13) und der Überführungsleitung (15) für das Pulver-Luft-Gemisch im wesentlichen in der geometrischen Mitte dieses Rotationshohlkörpers (3, 4) angeordnet sind.

2. Handstück nach Anspruch 1, bei welchem der Rotationshohlkörper die Form einer Hohlkugel (3, 4) aufweist.

3. Handstück nach Anspruch 1, bei welchem der Rotationshohlkörper die Form eines hohlen Rotationsellipsoids aufweist, dessen Hauptachse in der Längsrichtung des Handstückes (1) verläuft.

4. Handstück nach einem der Ansprüche 1 bis 3, bei welchem der Rotationshohlkörper (3, 4) etwa auf halber Länge der Griffhülse (5) angeordnet und mit ihm im wesentlichen der Schwerebereich des Handstückes (1) ausgebildet ist.

5. Handstück nach einem der Ansprüche 1 bis 4, bei welchem der Hohlraum des Rotationshohlkörpers (3, 4) mit Prallflächen (19) zur Unterstützung einer Verwirbelung des Pulver-Luft-Gemisches versehen ist.

6. Handstück nach einem der Ansprüche 1 bis 5, bei welchem der Rotationshohlkörper (3, 4) aus einem an der Griffhülse (5) fest angeordneten ersten Teilstück (3) und einem im wesentlichen gleich groß ausgebildeten zweiten Teilstück besteht, welches als ein abnehmbarer Deckelteil (4) mit dem ersten Teilstück lösbar verbunden ist.

7. Handstück nach Anspruch 6, bei welchem der Deckelteil (4) mit dem fest an der Griffhülse (5) angeordneten ersten Teilstück (3) des Rotationshohlkörpers (3, 4) über einen Bajonettverschluß (7) verbunden ist, dessen Schließstellung durch eine Schnappverbindung (8, 9) des Deckelteils (4) mit der Griffhülse (5) gesichert ist.

8. Handstück nach Anspruch 6 oder 7, bei welchem zwischen dem Deckelteil (4) und dem ersten Teilstück (3) des Rotationshohlkörpers (3, 4) ein Dichtungsring (6) mit zwei stufenförmig abgesetzten Dichtungslippen (6', 6'') angeordnet ist, von welchen die eine Dichtungslippe (6') als ein Druck- und Quetschteil der Dichtung in eine Ringnut des Deckelteils (4) einfaßt und die zweite Dichtungslippe (6") an einem inneren Dichtungsrand des ersten Teilstückes (3) abdichtend anliegt.

9. Handstück nach einem der Ansprüche 1 bis 8, bei welchem das Auslaßende der Druckluft-Zuleitung und das Einlaßende der Überführungsleitung (15) für das Pulver-Luft-Gemisch mit zwei Rohrstücken (13, 16) ausgebildet sind, welche an dem ersten Teilstück (3) des Rotationshohlkörpers (3, 4) eine im wesentlichen gegen dessen geometrische Mitte ausgerichtete und in seinen Hohlraum vorstehende Anordnung aufweisen.

10. Handstück nach Anspruch 9, bei welchem die beiden Rohrstücke (13, 16) an der Griffhülse (5) relativ verstellbar angeordnet sind.

11. Handstück nach Anspruch 9 oder 10, bei welchem das Rohrstück (13) des Auslaßendes der Druckluft-Zuleitung mit einem perforierten Kranz von Luft-Auslaßöffnungen (20) stromaufwärts von einer endseitigen Verschlußplatte (21) versehen ist.

12. Handstück nach einem der Ansprüche 9 bis 11, bei welchem das Rohrstück (16) des Einlaßendes der Überführungsleitung (15) mit einem perforierten Kranz von Einlaßöffnungen (22) für das Pulver-Luft-Gemisch stromabwärts von einem eine mittige Einlaßbohrung (23) aufweisenden endseitigen Düsenstück (24) versehen ist.

13. Handstück nach einem der Ansprüche 9 bis 12, bei welchem die beiden Rohrstücke (13, 16) unter einem Winkel von etwa 130° bis 135° schräg zueinander verlaufen und zwischen einer kantenseitigen Berührungsstellung und einem kantenseitigen Abstand der Verschlußplatte (21) und des Düsenstückes (24) bis maximal etwa 1.0 bis 1.5 mm relativ zueinander verstellbar sind.

14. Handstück nach einem der Ansprüche 6 bis 13, bei welchem das erste Teilstück (3) des Rotationshohlkörpers (3, 4) eine mit der Griffhülse (5) einstückige Ausbildung aufweist, wobei in seiner Wand (14) eine Teillänge (25) der Zuleitung für Wasser ausgebildet ist.

## Claims

1. A dental handpiece (1) for a prophylaxis treatment of carious teeth by means of a powder mixed with air and water, comprising
- a gripping sleeve (5)
- a powder container (2) integrated with the gripping sleeve (5) which stores a predetermined amount of powder for the treatment of teeth;
- a supply line (13) for pressurised air connected to the powder container (2);
- a transfer line (15) for powder mixed with air extending between the powder container (2) and a multiple nozzle arrangement (11) on a forward spray head (10) of the gripping sleeve (5), an inlet end on the side of the container of the transfer line being arranged adjacent to an outlet end of the supply line (13) for pressurised air;
- a supply line (25) for water connected to the multiple nozzle arrangement (11); and
- a coupling half portion (12) of a turbine in-line quick coupling of a supply connection for air and water provided on a rearward end of the gripping sleeve (5); characterised in that
- the powder container (2) is formed as a closed hollow body of rotation (3, 4) acting spatially in all directions as a whirl chamber, and
- the outlet and inlet ends of the supply line (13) for pressurised air and of the transfer line (15) for the powder and air mixture, respectively are arranged substantially in the geometric center of the hollow body of rotation (3, 4).

2. A handpiece according to claim 1, wherein the hollow body of rotation is formed as a hollow sphere (3, 4).

3. A handpiece according to claim 1, wherein the hollow body of rotation is formed as a hollow ellipsoid of rotation the main axis of which extends along a longitudinal direction of the handpiece (1).

4. A handpiece according to any of the claims 1 to 3, wherein the hollow body of rotation (3, 4) is arranged approximately at half length of the gripping sleeve (5) and substantially forms the gravity center of the handpiece (1).

5. A handpiece according to any of the claims 1 to 4, wherein the hollow space of the hollow body of rotation (3, 4) is provided with baffles (19) for supporting a turbulence of the powder and air mixture.

6. A handpiece according to any of the claims 1 to 5, wherein the hollow body of rotation (3, 4) comprises a first portion (3) which is fixedly arranged on the gripping sleeve (5) and a second portion which is substantially equally sized and forms a removable cover member (4) that is detachably connected to the first portion.

7. A handpiece according to claim 6, wherein the cover member (4) is connected to the first portion (3) of the hollow body of rotation (3, 4) as fixedly arranged on the gripping sleeve (5) by means of a bayonet catch (7) having a closing position which is secured by means of a snap connection (8, 9) of a cover member (4) with the gripping sleeve (5).

8. A handpiece according to claim 6 or 7, wherein a sealing ring (6) is arranged between the cover member (4) and the first portion (3) of the hollow body of rotation (3, 4) comprising two stepped and mutually offset sealing lips (6', 6") of which the one sealing lip (6') projects into an annular groove of the cover meber (4) as a compression and squeezer member and the second sealing lip (6") sealingly contacts an inner sealing rim of the first portion (3).

9. A handpiece according to any of the claims 1 to 8, wherein the outlet end of the supply line for pressurised air and the inlet end of the transfer line (15) for the powder and air mixture are formed with two tubular pieces (13, 16) which are arranged on the first portion (3) of the hollow body of rotation (3, 4) as projecting substantially towards the geometric center of the same and into its hollow space.

10. A handpiece according to claim 9, wherein the two tubular pieces (13, 16) are relatively adjustably arranged on the gripping sleeve (5).

11. A handpiece according to claim 9 or 10, wherein the tubular piece (13) of the outlet end of the supply line for pressurised air is provided with a perforated belt of air outlet ports (20) upstream of an endside closure plate (21).

12. A handpiece according to any of the claims 9 to 11, wherein the tubular piece (16) of the inlet end of the transfer line (15) is provided with a perforated belt of inlet of ports (22) for the powder and air mixture upstream of an endside nozzle piece (24) having a center inlet bore (23).

13. A handpiece according to any of the claims 9 to 12, wherein the two tubular pieces (13, 16) are arranged with respect to each other at an angle of inclination of about 130° to 135° and are relatively adjustable with respect to each other between a mutual contact position of the edges of the closure plate (21) and of the nozzle piece (24) and a spaced apart position of about 1.0 to 1.5 mm as a maximum.

14. A handpiece according to any of the claims 6 to 13 wherein the first portion (3) of the hollow body of rotation (3, 4) is integrally formed with the gripping sleeve (5) whereby its wall (14) is provided with a partial length (25) of the supply line for water.

## Revendications

1. Un porte-outil (1) du dentiste au traitement prophylactique des dents affectées de la carie dentaire, par application d'une poudre mélangée avec de l'air et de l'eau, comprenant:
- une douille de manche (5);
- un réservoir de poudre (2) intégré dans ladite douille de manche (5), à stocker une quantité de poudre déterminée pour le traitement des dents;
- une conduite d'alimentation (13) reliée audit réservoir de poudre (2) pour l'alimentation en air comprimé;
- une conduite de transfert (15) à transférer de la poudre mélangée avec de l'air, qui s'étend entre ledit réservoir de poudre (2) et un système de tuyère (11) aux usages multiples à une tête de pulvérisation (10) avant sur ladite douille de manche (5), l'extrémité d'admission du côté dudit réservoir étant disposée au voisinage immédiat de l'extrémité de sortie de ladite conduite d'alimentation d'air comprimé (13) du côté dudit réservoir;
- une conduite d'alimentation (25) pour l'alimentation en eau, qui est reliée audit système de tuyère (11) multiple; et
- une moitié de coupleur (12) d'un raccord rapide de turbine d'un raccord d'alimentation en air et en eau, laquelle est disposée à l'extrémité arrière de ladite douille de manche (5),
caractérisé en ce que
- ledit réservoir (2) de poudre est conçu sous forme d'un corps de révolution creux (3, 4) fermé à activité tridimensionnelle dans toutes les directions sous forme d'une chambre de tourbillonnement, et
- en ce que les extrémités de sortie et d'admission de ladite conduite d'alimentation en air comprimé (13) et de ladite conduite de transfert (15) à transférer le mélange de poudre et de l'air sont disposées essentiellement au milieu géométrique de ce corps de révolution creux (3, 4).

2. Un porte-outil selon la revendication 1, dans lequel ledit corps de révolution creux a la forme d'une sphère creuse (3, 4).

3. Un porte-outil selon la revendication 1, dans lequel ledit corps de révolution creux a la forme d'un ellipsoïde de révolution creux, dont l'axe principal s'étend selon la direction longitudinale dudit porte-outil (1).

4. Un porte-outil selon une quelconque des revendications 1 à 3, dans lequel ledit corps de révolution creux (3, 4) est disposé à mi-longueur environ de ladite douille de manche (5), à la zone de poids du porte-outil (1) étant formé essentiellement par ce corps.

5. Un porte-outil selon une quelconque des revendications 1 à 4, dans lequel la cavité dudit corps de révolution creux (3, 4) est pourvue des surfaces de rebondissement (19) à assister le tourbillonnement du mélange de poudre et de l'air.

6. Un porte-outil selon une quelconque des revendications 1 à 5, dans lequel ledit corps de révolution creux (3, 4) est composé d'une première pièce élémentaire (3) disposée, de façon fixe, à ladite douille de manche (5), et d'une deuxième pièce élémentaire à une grandeur essentiellement égale à celle de la première pièce, qui est reliée de façon amovible à la première pièce élémentaire sous forme d'un élément de couvercle amovible (4).

7. Un porte-outil selon la revendication 6, dans lequel ledit élément de couvercle (4) est raccordé à ladite première pièce élémentaire (3) dudit corps de révolution creux (3, 4), qui est disposée de façon fixe à ladite douille de manche (5), via un emboîtement à baïonnette (7) dont la position de fermeture est arrêtée par enclenchement (8, 9) dudit élément de couvercle (4) à ladite douille de manche (5).

8. Un porte-outil selon la revendication 6 ou 7, dans lequel un anneau d'étanchéité (6) à deux lèvres d'étanchéité (6', 6") décalées à gradins est disposé entre ledit élément de couvercle (4) et ladite première pièce élémentaire (3) dudit corps de révolution creux (3, 4), dont l'une lèvre d'étanchéité (6') s'engage comme élément de pression et de serrage du joint d'étanchéité dans une rainure annulaire dudit élément de couvercle (4) et dont la deuxième lèvre d'étanchéité (6") porte contre un bord d'étanchéité intérieur de ladite première pièce élémentaire (3) en assurant l'étanchéité.

9. Un porte-outil selon une quelconque des revendications 1 à 8, dans lequel l'extrémité de sortie de ladite conduite d'alimentation en air comprimé et l'extrémité d'admission de ladite conduite de transfert (15) à transférer le mélange de poudre et de l'air sont conçues à deux éléments de tube (13, 16) qui présentent, à ladite première pièce élémentaire (3) dudit corps de révolution creux (3, 4) un arrangement dirigé essentiellement vers le milieu géométrique du corps et en saillie dans la cavité du dernier.

10. Un porte-outil selon la revendication 9, dans lequel lesdits éléments de tube (13, 16) sont disposés à ajustement relatif à ladite douille de manche (5).

11. Un porte-outil selon la revendication 9 ou 10, dans lequel ledit élément de tube (13) de l'extrémité de sortie de ladite conduite d'alimentation en air comprimé est pourvu d'une couronne perforée d'orifices de sortie d'air (20) en amont d'une plaque de fermeture (21) du côté de l'extrémité.

12. Un porte-outil selon une quelconque des revendications 9 à 11, dans lequel ledit élément de tube (16) de l'extrémité d'admission de ladite conduite de transfert (15) est pourvu d'une couronne perforée d'orifices d'admission (22) du mélange de poudre et de l'air en aval d'un élément de tuyère (24) du côté d'extrémité, qui comprend un alésage d'admission central (23).

13. Un porte-outil selon une quelconque des revendications 9 à 12, dans lequel lesdits deux éléments de tube (13, 16) s'étendent à un angle de 130° à 135° environ en biais l'un relativement à l'autre, en étant aptes à être ajustés, l'un relativement à l'autre, entre une position de contact du côté du bord et un écart du côté du bord de ladite plaque de fermeture (21) et dudit élément de tuyère (24) jusqu'à une étendue maximale de 1,0 à 1,5 mm environ.

14. Un porte-outil selon une quelconque des revendications 6 à 13, dans lequel ladite première pièce élémentaire (3) dudit corps de révolution creux (3, 4) présent une configuration intégrale avec ladite douille de manche (5), une longueur partielle (25) étant formée dans sa paroi (14) pour l'alimentation en eau.
